# DEMANDE DE BREVET EUROPEEN

(11) **EP 1 772 309 A2**
(43) Date de publication de la demande: **11.04.2007**
(21) Numéro de dépôt: 06291583.0
(22) Date de dépôt: 10.10.2006
(51) Int. Cl.: B60N 2/58

(54) **Matelassure de siège de véhicule automobile**

(30) Priorité: 10.10.2005 FR 0553065; 13.10.2005 FR 0553115
(71) Demandeur: CENTRE D'ETUDE ET RECHERCHE POUR L'AUTOMOBILE ( CERA), 51100 Reims (FR)
(72) Inventeur: Savigne, Pascal, 56800 Taupont (FR)
(74) Mandataire: Sayettat, Julien Christian

(57) **Abrégé**

L'invention concerne une matelassure (1) de siège de véhicule automobile comprenant une coiffe (2) recouvrant un corps en mousse (3), ladite coiffe comprenant un médaillon (4) sensiblement plan entouré, au moins partiellement, par une zone périphérique (5) qui lui est associée par confection, ladite zone périphérique comprenant des moyens d'association (6) destinés à être associés à des moyens complémentaires disposés sur la structure du siège, ledit médaillon étant surmoulé par ladite mousse alors que ladite zone périphérique en est dissociée.

## Description

L'invention concerne une matelassure de siège de véhicule automobile, un procédé de réalisation d'une telle matelassure, un moule mis en oeuvre dans un tel procédé et un siège de véhicule comprenant une telle matelassure.

Il est connu de réaliser une matelassure de siège de véhicule automobile par un procédé dit « in situ », qui consiste à injecter un volume précurseur de mousse dans une coiffe de revêtement préalablement confectionnée et disposée dans un moule, puis à démouler la matelassure obtenue après expansion de la mousse.

Par coiffe confectionnée, on entend une coiffe résultant de l'association, par exemple par couture ou soudure, de au moins deux éléments de revêtement plans, par exemple à base de cuir ou de textile, ceci de sorte à conférer à la coiffe une géométrie tridimensionnelle.

Une coiffe comprend typiquement un médaillon, sensiblement plan, entouré, au moins partiellement, d'une zone périphérique de forme convexe de sorte à former un bossage périphérique de maintien de l'occupant sur la matelassure.

Dans une telle réalisation « in situ », la coiffe est surmoulée sur son envers par la mousse, ce qui permet notamment une parfaite association entre les deux et donc une bonne tenue de la matelassure ainsi obtenue, en particulier dans les zones concaves.

Cependant, l'opération de confection conduit en pratique, du fait des dispersions dimensionnelles générées lors de l'association des éléments de revêtement, à des coiffes dont les dimensions présentent des dispersions.

Lorsque ces dispersions sont trop importantes, les matelassures obtenues après expansion de la mousse peuvent présenter, du fait de leur mauvais positionnement dans le moule, des défauts d'aspects, notamment sous forme de plis sur la coiffe. De tels plis ne peuvent être supprimés du fait que la coiffe est surmoulée par la mousse.

L'invention a pour but de pallier cet inconvénient en proposant une matelassure présentant une esthétique améliorée et conçue de sorte à limiter l'apparition de défauts à l'issue de l'expansion de la mousse.

A cet effet et selon un premier aspect, l'invention propose une matelassure de siège de véhicule automobile comprenant une coiffe recouvrant un corps en mousse, ladite coiffe comprenant un médaillon sensiblement plan entouré, au moins partiellement, par une zone périphérique qui lui est associée par confection, ladite zone périphérique comprenant des moyens d'association destinés à être associés à des moyens complémentaires disposés sur la structure du siège, ledit médaillon étant surmoulé par ladite mousse alors que ladite zone périphérique en est dissociée.

Par médaillon sensiblement plan, on entend qu'il présente une forme développable, ne requérant pas d'associer des éléments de revêtement entre eux pour l'obtenir.

Selon l'invention, la partie de coiffe surmoulée par la mousse, à savoir le médaillon, ne présente pas de dispersions dimensionnelles, ce qui supprime les défauts évoqués ci-dessus.

Selon un deuxième aspect, l'invention propose un siège de véhicule automobile comprenant une telle matelassure, ledit siège comprenant une structure de siège, la coiffe de ladite matelassure comprenant un médaillon sensiblement plan surmoulé par la mousse et une zone périphérique qui en est dissociée, ladite zone périphérique étant associée à la structure du siège par des moyens d'association associés à des moyens d'association complémentaires prévus sur la structure de sorte que la zone périphérique est plaquée contre la mousse.

Selon un troisième aspect, l'invention propose un procédé de réalisation d'une telle matelassure de siège de véhicule automobile, ledit procédé comprenant les étapes suivantes :
- prévoir un moule comprenant une cuve et un couvercle, ladite cuve comprenant une ouverture et une trappe mobile de fermeture étanche de ladite ouverture,
- réaliser une coiffe de revêtement comprenant un médaillon de forme analogue à celle de l'ouverture, ledit médaillon étant entouré, au moins partiellement, d'une zone de coiffe périphérique,
- disposer ladite coiffe sur ladite trappe, de sorte que ledit médaillon recouvre ladite trappe,
- fermer ladite ouverture avec ladite trappe de sorte à disposer ledit médaillon à l'intérieur de la cuve et à disposer ladite zone périphérique de façon saillante à l'extérieur de ladite cuve, un pincement étanche de ladite coiffe étant effectué autour dudit médaillon,
- injecter dans ladite cuve et sur le médaillon, un mélange précurseur de mousse souple, en fermant ledit couvercle de sorte à former une cavité de moulage,
- après expansion de la mousse, ouvrir ledit couvercle et ladite ouverture, et démouler la matelassure obtenue.

Selon un quatrième aspect, l'invention propose un moule utilisé dans un tel procédé, ledit moule comprenant une cuve pourvue d'une ouverture et d'une trappe de fermeture de ladite ouverture, la périphérie de ladite trappe étant agencée de sorte à permettre, lorsqu'elle ferme ladite ouverture, le pincement étanche de la coiffe.

D'autres particularités et avantages de l'invention apparaîtront dans la description qui suit, faite en référence aux figures jointes dans lesquelles :
- la figure 1 est une représentation schématique en coupe d'une matelassure selon l'invention,
- la figure 2 est une représentation schématique en coupe d'un moule pourvu d'une coiffe disposée de sorte à permettre l'injection d'un mélange précurseur de mousse souple,
- la figure 3 est une vue de détail de la zone A de la figure 2.

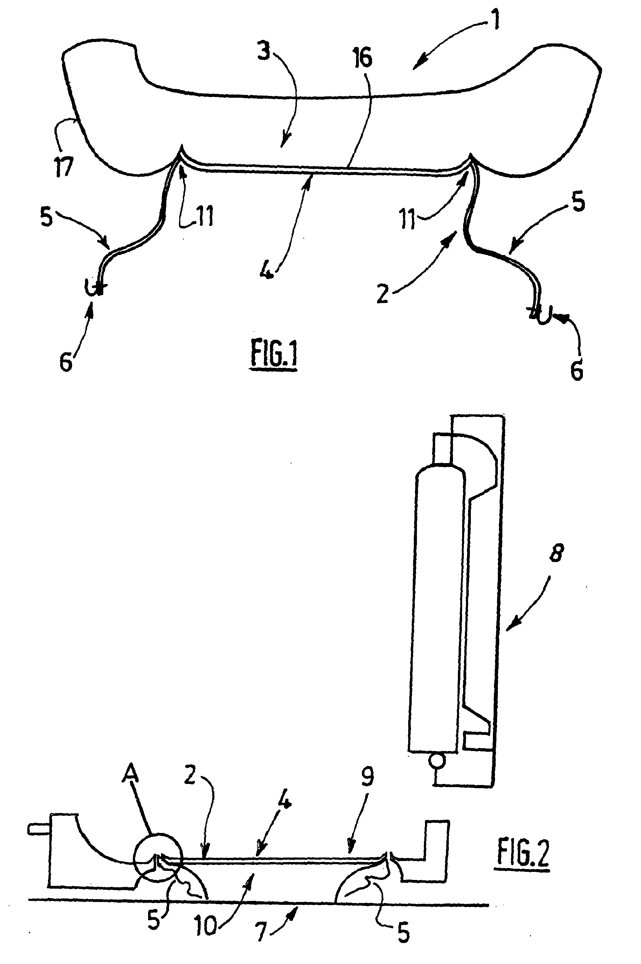

En référence à la figure 1, on décrit à présent une matelassure 1 de siège de véhicule automobile comprenant une coiffe 2 recouvrant un corps en mousse 3. La coiffe 2 comprend un médaillon 4 sensiblement plan entouré, au moins partiellement, par une zone périphérique 5 qui lui est associé par confection. La zone périphérique 5 comprend des moyens d'association 6, ici sous forme de profilés cousus sur son pourtour, destinés à être associés à des moyens complémentaires disposés sur la structure du siège. Conformément à l'invention, le médaillon 4 est surmoulé par la mousse 3 alors que la zone périphérique 5 en est dissociée, c'est-à-dire que la mousse 3 adhère au médaillon 4, tandis que la zone périphérique 5 n'est pas solidaire de la mousse 3.

Le corps en mousse 3 comprend une zone centrale 16 sensiblement plane à laquelle le médaillon 4 est associé et une zone périphérique 17 de forme sensiblement convexe, destinée à être recouverte par la zone périphérique 5 de la coiffe 2 lorsque celle-ci est associée à la structure du siège.

De façon non représentée, on décrit un siège de véhicule automobile comprenant une structure de siège, telle qu'une armature à laquelle est associée une matelassure 1 selon l'invention. La coiffe 2 de la matelassure 1 comprend un médaillon 4 sensiblement plan surmoulé par la mousse 3 et une zone périphérique 5 qui en est dissociée. La zone périphérique 5 est associée à la structure du siège, de sorte à être plaquée contre la mousse 3 lui faisant face, du fait de la convexité de la matelassure en regard de la dite zone périphérique. Typiquement, la zone périphérique 5 peut comprendre un profilé cousu 6 sur son pourtour, ledit profilé étant agencé pour pouvoir s'associer à la structure du siège dont le contour est pourvu d'un moyen de réception du profilé.

On obtient de la sorte une matelassure 1 présentant une cohésion entre la coiffe 2 et la mousse 3 équivalente à celle d'une matelassure dont toute la coiffe est surmoulée par la mousse, et ce avec une suppression des défauts liés aux dispersions dimensionnelles de la coiffe.

En référence à la figure 2, on décrit un procédé de réalisation d'une telle matelassure 1 de siège de véhicule automobile. Le procédé comprend les étapes suivantes :
- prévoir un moule comprenant une cuve 7 et un couvercle 8, ladite cuve comprenant une ouverture 9 et une trappe 10 mobile de fermeture étanche de ladite ouverture,
- réaliser une coiffe 2 de revêtement comprenant un médaillon 4 de forme analogue à celle de ladite ouverture, ledit médaillon étant entouré, au moins partiellement, d'une zone de coiffe périphérique 5,
- disposer ladite coiffe sur ladite trappe, de sorte que ledit médaillon recouvre ladite trappe,
- fermer ladite ouverture avec ladite trappe de sorte à disposer ledit médaillon à l'intérieur de ladite cuve et à disposer ladite zone périphérique de façon saillante à l'extérieur de la dite cuve, un pincement étanche de ladite coiffe étant effectué autour dudit médaillon,
- injecter dans ladite cuve et sur le médaillon un mélange précurseur de mousse souple, en fermant ledit couvercle de sorte à former une cavité de moulage,
- après expansion de la mousse, ouvrir ledit couvercle et ladite ouverture, et démouler la matelassure 1 obtenue.

Selon une réalisation non représentée, la cuve 7 peut être disposée au dessus du couvercle 8, de sorte à permettre l'injection du mélange précurseur de mousse dans le couvercle 8. Une telle réalisation permet à la mousse 3 d'entrer en contact avec le médaillon 4 en fin de polymérisation, ce qui limite la pénétration de mousse en envers dudit médaillon, appelée « croûtage », et en améliore le confort.

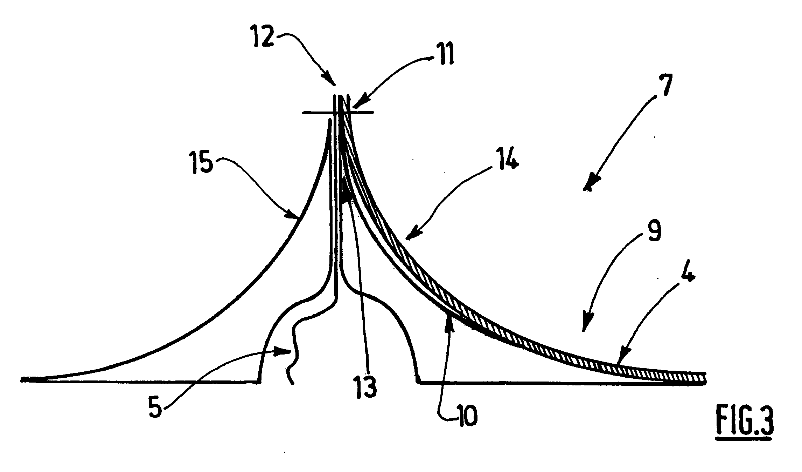

Selon la réalisation présentée, détaillée en figure 3, le médaillon 4 est associé à la zone périphérique 5 de la coiffe 2 par une couture 11 dont le pied de couture 12 est saillant vers l'intérieur de la coiffe 2, de sorte à définir dans ladite coiffe une gorge 13 disposée à l'opposé dudit pied de couture.

Une étape ultérieure du procédé de réalisation de la matelassure 1 consiste en l'association des moyens d'association 6 à la zone périphérique 5, par exemple, par couture de profilés sur ladite zone périphérique.

En référence à la figure 3, on voit que le moule comprend une cuve 7 pourvue d'une ouverture 9 et d'une trappe 10 de fermeture de ladite ouverture, la périphérie de ladite trappe étant agencée de sorte à permettre, lorsqu'elle ferme ladite ouverture, le pincement étanche de la coiffe 2, de sorte à éviter le passage de la mousse 3 lors de son expansion.

Selon la réalisation présentée, la périphérie de la trappe 10 forme un premier rebord 14 en saillie vers l'intérieur de la cuve 7, ledit rebord étant agencé de sorte à pouvoir s'insérer dans la gorge 13 de la coiffe 2. Un tel agencement permet de faciliter le positionnement de la coiffe 2 sur la trappe 10. La périphérie de l'ouverture 9 forme un deuxième rebord 15 analogue au premier 14 et agencé de sorte à permettre un pincement étanche de la zone périphérique 5 de la coiffe 2 entre lesdits rebords, à proximité du médaillon 4, lorsque la trappe 10 ferme l'ouverture 9.

## Revendications

1. Matelassure (1) de siège de véhicule automobile comprenant une coiffe (2) recouvrant un corps en mousse (3), ladite coiffe comprenant un médaillon (4) sensiblement plan entouré, au moins partiellement, par un zone périphérique (5) qui lui est associée par confection, ladite zone périphérique comprenant des moyens d'association (6) destinés à être associés à des moyens complémentaires disposés sur la structure du siège, ladite matelassure étant **caractérisée en ce que** ledit médaillon est surmoulé par ladite mousse alors que ladite zone périphérique en est dissociée.

2. Matelassure selon la revendication 1, **caractérisé en ce que** le corps en mousse (3) comprend une zone centrale (16) sensiblement plane à laquelle le médaillon (4) est associé et une zone périphérique (17) de forme sensiblement convexe, destinée à être recouverte par la zone périphérique (5) de la coiffe (2) lorsque celle-ci est associée à la structure du siège.

3. Siège de véhicule automobile comprenant une matelassure (1) selon la revendication 1 ou 2, ledit siège comprenant une structure de siège, la coiffe (2) de la dite matelassure comprenant un médaillon (4) sensiblement plan surmoulé par la mousse (3) et une zone périphérique (5) qui en est dissociée, ladite zone périphérique étant associée à la structure du siège par des moyens d'association (6) associés à des moyens d'associations complémentaires prévus sur ladite structure de sorte que la zone périphérique (5) est plaquée contre ladite mousse.

4. Procédé de réalisation d'une matelassure (1) de siège de véhicule automobile selon la revendication 1 ou 2, ledit procédé comprenant les étapes suivantes :
• prévoir un moule comprenant une cuve (7) et un couvercle (8), ladite cuve comprenant une ouverture (9) et une trappe (10) mobile de fermeture étanche de ladite ouverture,
• réaliser une coiffe (2) de revêtement comprenant un médaillon (4) de forme analogue à celle de ladite ouverture, ledit médaillon étant entouré, au moins partiellement, d'une zone de coiffe périphérique (5),
• disposer ladite coiffe sur ladite trappe, de sorte que ledit médaillon recouvre ladite trappe,
• fermer ladite ouverture avec ladite trappe de sorte à disposer ledit médaillon à l'intérieur de ladite cuve et à disposer ladite zone périphérique de façon saillante à l'extérieur de ladite cuve, un pincement étanche de ladite coiffe étant effectué autour dudit médaillon,
• injecter dans ladite cuve et sur ledit médaillon un mélange précurseur de mousse souple, en fermant ledit couvercle de sorte à former une cavité de moulage,
• après expansion de la mousse, ouvrir ledit couvercle et ladite ouverture, et démouler la matelassure (1) obtenue.

5. Procédé de réalisation d'une matelassure selon la revendication 4, **caractérisé en ce que** le médaillon (4) est associé à la zone périphérique (5) de la coiffe par une couture (11) dont le pied de couture (12) est saillant vers l'intérieur de ladite coiffe, de sorte à définir dans la coiffe une gorge (13) disposée à l'opposé dudit pied de couture.

6. Procédé de réalisation d'une matelassure selon la revendication 4 ou 5, **caractérisé en ce qu'**il comprend une étape d'association de moyens d'association (6) à la zone périphérique (5).

7. Moule utilisé dans un procédé selon l'une quelconque des revendications 4 à 6, **caractérisé en ce qu'**il comprend une cuve (7) pourvue d'une ouverture (9) et d'une trappe (10) de fermeture de ladite ouverture, la périphérie de ladite trappe étant agencée de sorte à permettre, lorsqu'elle ferme ladite ouverture, le pincement étanche de la coiffe (2).

8. Moule selon la revendication 7, lorsqu'elle dépend de la revendication 5, **caractérisé en ce que** la périphérie de la trappe (10) forme un premier rebord (14) en saillie vers l'intérieur de la cuve (7), ledit rebord étant agencé de sorte à pouvoir s'insérer dans la gorge (13) de la coiffe (2), la périphérie de l'ouverture (9) formant un deuxième rebord (15) analogue au premier et agencé de sorte à permettre un pincement étanche de la zone périphérique (5) de ladite coiffe entre lesdits rebords, à proximité du médaillon (4), lorsque ladite trappe ferme ladite ouverture.
